# EUROPEAN PATENT APPLICATION

(11) **EP 3 804 599 A1**
(43) Date of publication of application: **14.04.2021**
(21) Application number: 19815135.9
(22) Date of filing: 10.06.2019
(51) Int. Cl.: A47L 11/28, A47L 11/40

(54) **CLEANING ROBOT, CONTROL METHOD FOR SAME, AND CLEANING ROBOT SYSTEM**

(30) Priority: 08.06.2018 CN 201810590281; 08.06.2018 CN 201810588911
(71) Applicant: Positec Power Tools (Suzhou) Co., Ltd, Suzhou, Jiangsu 215123 (CN)
(72) Inventor: ZHANG, Shisong, Suzhou, Jiangsu 215123 (CN); ZHONG, Hongfeng, Suzhou, Jiangsu 215123 (CN); XIE, Mingjian, Suzhou, Jiangsu 215123 (CN); XU, Jianqiang, Suzhou, Jiangsu 215123 (CN); LI, Ji, Suzhou, Jiangsu 215123 (CN)
(74) Representative: Dentons UK and Middle East LLP
(86) International application number: PCT/CN2019/090603
(87) International publication number: WO 2019/233493

(57) **Abstract**

A cleaning robot, including: a housing; a moving module, and a control module, for controlling the moving module to drive the cleaning robot to move. When the cleaning robot moves on a working surface, a wiping unit is capable of directly or indirectly contacting the working surface to wipe the same. The cleaning robot includes a work execution state and a maintenance state. While the cleaning robot is switching from the work execution state to the maintenance state, the control module controls the cleaning robot to move from a work execution position corresponding to the work execution state to a maintenance position corresponding to the maintenance state. During at least a part of the process of the cleaning robot moving from the work execution position to the maintenance position, where the at least a part of the wiping unit is in a state of not contacting the working surface.

## Description

### BACKGROUND

### Technical Field

The present invention relates to a cleaning robot, control method for same, and cleaning robot system.

### Related Art

As requirements of a user are diversified, types of existing cleaning robots are increased, and a wiping robot (hereinafter also referred to as a mopping robot) is one of the cleaning robots. A mopping robot has a sweeping function and a mopping function at the same time, for example, a mopping robot is provided with a mopping assembly for wiping a cleaned ground in addition to a rolling brush for sweeping and dust absorption, to further improve the cleanliness of the ground. A mopping robot has only a mopping function, for example, a cleaning assembly of the mopping robot is a mopping assembly, to wipe the ground.

An existing mopping robot generally adopts a rag to perform a mopping operation. Specifically, the rag is connected to a mopping floor or a machine body, a hard ground is cleaned through a wet mop, or the mopping robot may perform dry mopping without wetting the mop. Inevitably, a longer mopping time of the rag indicates a poorer cleaning effect of the mop, and a growing number of stains will be attached to the mop. For this reason, a user has to regularly remove, clean, and replace the rag with a clean mop, so that a manual work for the user will reduce the automated operating experience of the robot.

An existing mopping robot generally adopts a battery pack for power supply. When the battery pack level is lower than a specific threshold, the battery pack needs to be supplemented with electric energy in time so as to prevent the battery pack from being damaged due to over-discharge and ensure the continuous work of the robot. The user frequently intervenes to charge the robot, so that use experience of the user is affected, and the intelligence of the cleaning robot is reduced.

A growing number of ornaments such as a carpet are used in the existing indoor environment, when the mopping robot moves to the carpet, a mopping component is in contact with the carpet, frictional resistance exists, and the carpet is easily damaged by scraping or pollution.

Therefore, a new technical solution needs to be designed to solve the above technical problems.

### SUMMARY

The present invention provides a cleaning robot, comprising: a housing; a moving module, mounted at the housing and configured to drive the cleaning robot to move; and a control module, configured to control the moving module to drive the cleaning robot to move, where the cleaning robot is configured to mount a wiping unit, and when the cleaning robot moves on a working surface, the wiping unit is capable of directly or indirectly contacting the working surface to wipe the working surface, so as to perform a cleaning work; the cleaning robot comprises a work execution state, the cleaning robot performs the cleaning work in the work execution state, the cleaning robot further includes a maintenance state, and the cleaning robot is capable of switching from the work execution state to the maintenance state; while the cleaning robot is switching from the work execution state to the maintenance state, the control module controls the cleaning robot to move from a work execution position corresponding to the work execution state to a maintenance position corresponding to the maintenance state; and the control module is configured to change a contact state between the wiping unit and the working surface, to enable at least a part of the wiping unit to be in a state of not contacting the working surface in at least a part of the process in which the cleaning robot moves from the work execution position to the maintenance position, where the at least a part is in a state of contacting the working surface in the work execution state.

In an embodiment, the maintenance state includes a replenishing state, and the maintenance position includes a position of a base station for providing replenishment.

In an embodiment, the cleaning robot is powered by a battery to move and/or work, the replenishing state includes a charging state for charging the battery, and the base station includes a charge station.

In an embodiment, when the cleaning robot detects that a battery power is lower than or a working time is greater than a preset value, or when the cleaning robot receives information about replenishment of electrical energy, the control module controls the cleaning robot to switch a state.

In an embodiment, the cleaning robot is capable of automatically removing dirt accumulated on the working surface wiped by the wiping unit, and the maintenance state includes a dirt removal state.

In an embodiment, the wiping unit is removably mounted at the cleaning robot, the dirt removal state includes an operation and/or operations of removing the wiping unit and/or mounting the wiping unit, and the maintenance position includes a position of a base station in which the wiping unit is removed and/or mounted.

In an embodiment, when the cleaning robot detects that a preset condition for removing the dirt is met, or receives information about removing the dirt, the control module controls the cleaning robot to switch a state.

In an embodiment, the wiping unit is capable of removably mounting a wiping material, and when wiping the working surface, the wiping unit indirectly contacts the working surface through the wiping material.

In an embodiment, the maintenance state includes a standby state, and the maintenance position includes a position of a base station for the cleaning robot to stop.

In an embodiment, the cleaning robot includes a lifting mechanism, the control module is further configured to control the lifting mechanism to lift the wiping unit, and the changing a contact state between the wiping unit and the working surface includes: controlling, by the control module, the lifting mechanism to lift the wiping unit, so that the wiping unit does not contact the working surface.

In an embodiment, the wiping unit includes a wiping plane, configured to wipe the working surface, and when the lifting mechanism lifts the wiping unit, the lifting mechanism lifts the wiping plane from a first height position contacting the working surface to a second height position not contacting the working surface.

In an embodiment, the lifting mechanism includes an elevating mechanism or a swing mechanism.

In an embodiment, the cleaning robot includes a rotating mechanism, the control module is further configured to control the rotating mechanism to rotate the wiping unit, and the changing a contact state between the wiping unit and the working surface includes: controlling, by the control module, the rotating mechanism to rotate the wiping unit, to change a part of the wiping unit contacting the working surface.

In an embodiment, the control module controls the rotating mechanism to drive the wiping unit to rotate, so that a part of the wiping unit that contacts the working surface in the work execution state is away from the working surface, and a part of the wiping unit that does not contact the working surface in the work execution state is close to the working surface.

In an embodiment, the wiping unit includes a rotating shaft, a wiping surface of the wiping unit for wiping the working surface forms a curved surface around the rotating shaft, and the rotating mechanism drives the wiping unit to rotate around the rotating shaft, to change a part of the curved surface contacting the working surface.

In an embodiment, while the cleaning robot is moving from the work execution position to the maintenance position, the at least a part of the wiping unit is maintained in the state of not contacting the working surface.

In an embodiment, when the cleaning robot is in the maintenance state, and/or before the cleaning robot leaves the maintenance position after completing maintenance, the at least a part of the wiping unit is maintained in the state of not contacting the working surface.

In an embodiment, the cleaning robot is powered by a battery to move and/or work, the maintenance state includes a charging state for charging the battery, the wiping unit is removably mounted at the cleaning robot, and when the cleaning robot is in the charging state, the cleaning robot is in a state of removing the wiping unit.

In an embodiment, before the cleaning robot restores the work execution state, the at least a part of the wiping unit is maintained in the state of not contacting the working surface.

In an embodiment, the cleaning robot receives information from a user, and the control module controls, according to the information from the user, the cleaning robot to switch a state.

In an embodiment, the cleaning robot comprises a wireless signal receiving unit and remotely receives the information from the user through the wireless signal receiving unit; or the cleaning robot comprises an operation unit and locally receives the information from the user through the operation unit.

In an embodiment, the cleaning robot comprises a surface detection sensor, electrically connected to the control module and configured to detect whether a cleaning work needs to be performed on a surface in a moving direction of the cleaning robot; the control module is further configured to control the cleaning robot to exit from the work execution state when the surface detection sensor detects that the cleaning work does not need to be performed on the surface in the moving direction of the cleaning robot; and the exiting from the work execution state comprises: enabling at least a part of the wiping unit to be in a state of not contacting the surface on which the cleaning work does not need to be performed, where the at least a part is in a state of contacting the working surface in the work execution state.

In an embodiment, the exiting from the work execution state further comprises: enabling the cleaning robot to move on the surface on which the cleaning work does not need to be performed.

In an embodiment, the surface detection sensor comprises a carpet detection sensor, configured to detect whether there is a carpet in the moving direction of the cleaning robot, and if it is detected that there is the carpet, the control module controls the cleaning robot to exit from the work execution state.

The present invention further provides a cleaning robot system, comprising a cleaning robot according to any of the foregoing, and a base station, where the base station provides maintenance for the cleaning robot.

The present invention further provides a control method for a cleaning robot, the cleaning robot comprises a housing, a moving module, and a control module; the control module is configured to control the moving module to drive the cleaning robot to move; the cleaning robot is configured to mount a wiping unit, and when the cleaning robot moves on a working surface, the wiping unit is capable of wiping the working surface to perform a cleaning work; and the control method comprises the following steps: controlling the cleaning robot to perform the cleaning work; determining whether a maintenance condition is met; controlling the cleaning robot to move from a work execution position to a maintenance position if the maintenance condition is met; and changing a contact state between the wiping module and the working surface, to enable at least a part of the wiping module to be in a state of not contacting the working surface in at least a part of the process in which the cleaning robot moves from the work execution position to the maintenance position, where the at least a part is in a state of contacting the working surface in a work execution state.

In an embodiment, the determining whether a maintenance condition is met comprises: determining, by the cleaning robot according to detection of a parameter of the cleaning robot, whether the maintenance condition is met, or determining, by the cleaning robot according to receiving of external information, whether the maintenance condition is met.

In an embodiment, the external information comprises information from a user.

In an embodiment, the maintenance condition comprises a parameter of at least one of the following reaching a preset value: a battery power, a working time, or a working area of the cleaning robot, or a pollution level of the wiping module.

In an embodiment, the changing a contact state between the wiping module and the working surface comprises: lifting the wiping module to enable the wiping module to not contact the working surface; or rotating the wiping module to change a part of the wiping module contacting the working surface.

The foregoing embodiments have the following beneficial effects: the wiping unit does not pollute the working surface in a process in which the cleaning robot returns to the base station, so that the cleaning robot can work in a cleaner manner.

The present invention further provides a cleaning robot system, the cleaning robot system comprises a cleaning robot, and the cleaning robot comprises: a housing; a moving module, mounted at the housing and configured to drive the cleaning robot to move; and a control module, configured to control the moving module to drive the cleaning robot to move; the cleaning robot is configured to mount a wiping unit, and when the cleaning robot moves on a working surface, the wiping unit is capable of wiping the working surface to perform a cleaning work; the cleaning robot comprises a work execution state, the cleaning robot performs the cleaning work in the work execution state, the cleaning robot further comprises a maintenance state, and the cleaning robot is capable of switching from the work execution state to the maintenance state; the control module is further configured to trigger the cleaning robot to switch from the work execution state to the maintenance state; and the cleaning robot is capable of receiving information from a user, and the control module triggers the state switching according to the information from the user.

In an embodiment, the cleaning robot comprises a first communication unit, the first communication unit comprises a wireless signal receiving unit, and the cleaning robot remotely receives the information from the user through the wireless signal receiving unit, or the cleaning robot comprises an operation unit, and the cleaning robot locally receives the information from the user through the operation unit.

In an embodiment, the cleaning robot system further comprises a base station, configured to provide maintenance for a cleaning robot.

The cleaning robot comprises a first communication unit, electrically connected to the control module; the base station comprises a second communication unit, communicating with the first communication unit of the cleaning robot; and the base station is capable of receiving the information from a user, the cleaning robot obtains the information from the user based on communication between the second communication unit and the first communication unit, and the control module of the cleaning robot triggers the state switching based on the information obtained by the first communication unit.

The foregoing embodiments have the following beneficial effects: the user can trigger the cleaning robot to return to the base station for maintenance, an operation of the user is more convenient, and the robot is more flexibly controlled.

The present invention further provides a cleaning robot system, including a cleaning robot and a base station; the cleaning robot comprises: a housing; a moving module, mounted at the housing and configured to drive the cleaning robot to move; and a control module, configured to control the moving module to drive the cleaning robot to move; the cleaning robot is configured to mount a wiping unit, and when the cleaning robot moves on a working surface, the wiping unit is capable of wiping the working surface to perform a cleaning work; the cleaning robot further comprises a maintenance state, and the base station provides maintenance for the cleaning robot; the wiping unit is removably mounted at the cleaning robot, and the maintenance state comprises an operation and/or operations of removing and/or mounting the wiping unit; the control module is further configured to control the cleaning robot to remove the wiping unit and/or mount the wiping unit; and the base station is configured to recycle the removed wiping unit and provide the wiping unit for mounting.

### BRIEF DESCRIPTION OF THE DRAWINGS

The foregoing technical problems, technical solutions, and beneficial effects of the present invention may be described in detail by using the following specific embodiments that can implement the present invention, and are clearly obtained with reference to the description of the accompanying drawings.
FIG. 1 is a structural diagram of a cleaning robot system according to an embodiment of the present invention.
FIG. 2 is a block diagram of the cleaning robot system shown in FIG. 1.
FIG. 3(a) and FIG. 3(b) are schematic diagrams of the cleaning robot shown in FIG. 1.
FIG. 4(a) and FIG. 4(b) are schematic diagrams of lifting a wiping unit according to an embodiment of the present invention.
FIG. 5(a) and FIG. 5(b) are schematic diagrams of lifting a wiping unit according to another embodiment of the present invention.
FIG. 6(a) and FIG. 6(b) are schematic diagrams of rotating a wiping unit according to an embodiment of the present invention.
FIG. 7 is a flowchart of switching a state of a cleaning robot according to an embodiment of the present invention.
FIG. 8(a) to FIG. 8(f) are schematic diagrams when a cleaning robot encounters a carpet according to an embodiment of the present invention.
FIG. 9(a) to FIG. 9(e) are schematic diagrams when a cleaning robot encounters a doorsill according to an embodiment of the present invention.
FIG. 10(a) to FIG. 10(f) are schematic diagrams when a cleaning robot encounters a doorsill according to another embodiment of the present invention.
FIG. 11 is a schematic diagram of a base station according to an embodiment of the present invention.
FIG. 12(a) to FIG. 12(i) are schematic diagrams of replacing a wiping unit of a cleaning robot according to an embodiment of the present invention.

### DETAILED DESCRIPTION

Detailed descriptions and technical contents of the present invention are described below in cooperation with the accompanying drawings. However, the accompanying drawings only provide reference and description rather than limit the present invention.

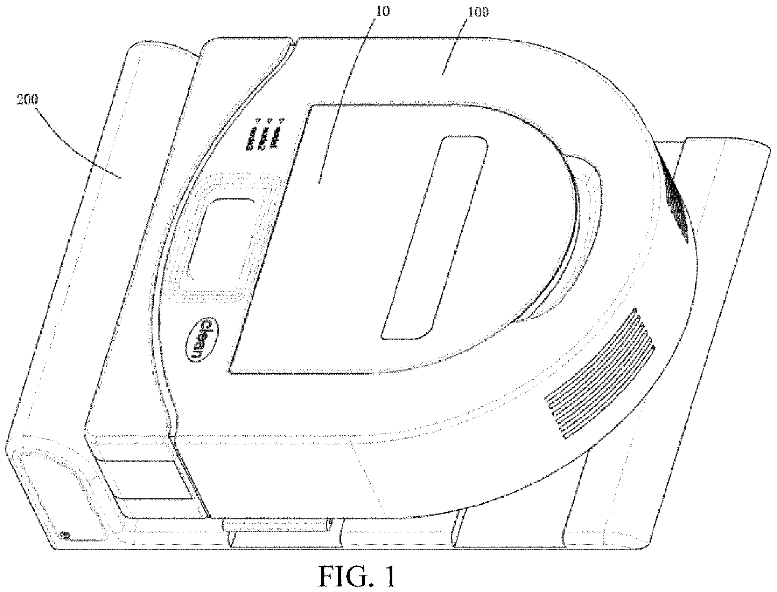

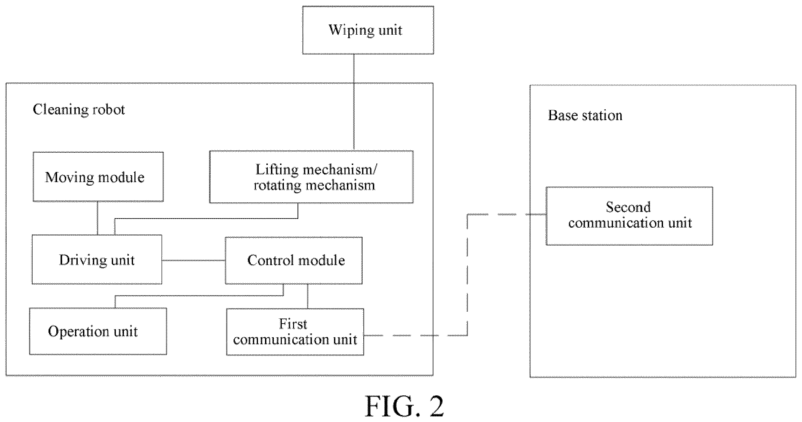

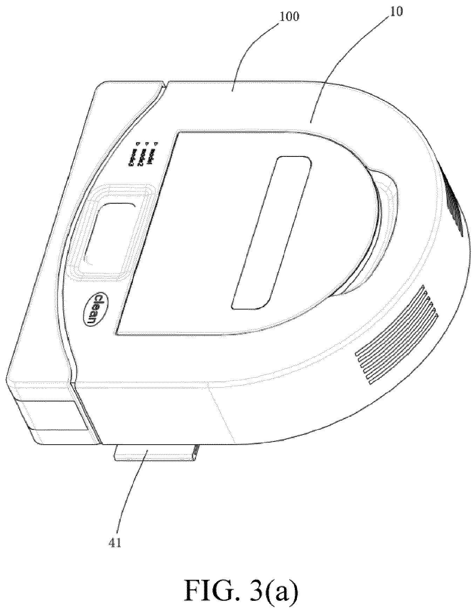

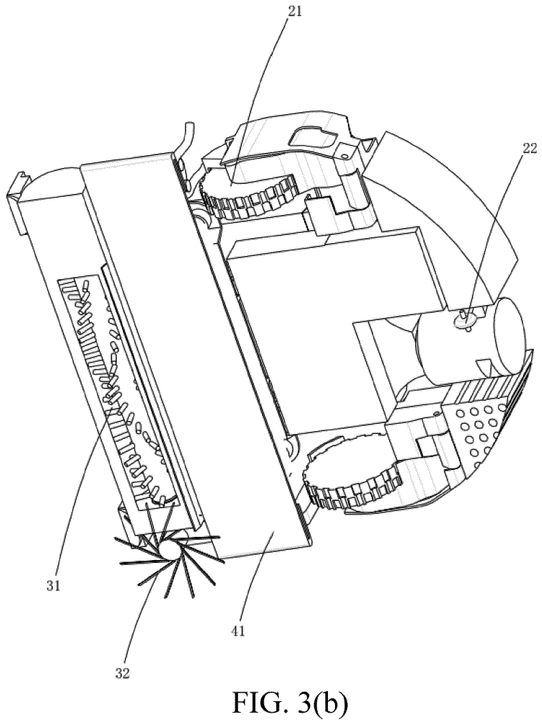

FIG. 1 is a structural diagram of a cleaning robot system according to an embodiment of the present invention. FIG. 2 is a block diagram of the cleaning robot system shown in FIG. 1. In this embodiment, the cleaning robot system includes a cleaning robot and a base station. FIG. 3(a) and FIG. 3(b) are schematic diagrams of the cleaning robot according to this embodiment. With reference to FIG. 1 to FIG. 3, the cleaning robot includes a housing; a moving module, mounted at the housing and configured to drive the cleaning robot to move, where the moving module includes a wheel set; and a control module, configured to control the moving module to drive the cleaning robot to move; and the cleaning robot further includes a wiping module, mounted at the housing, and when the cleaning robot moves on a working surface, the wiping module is capable of performing a cleaning work. The wiping module is configured to mount a wiping unit 12, and the wiping unit is enabled to directly or indirectly contact the working surface to wipe the working surface, to perform a cleaning work. The working surface includes a ground such as a floor and a floor tile. In this embodiment, the cleaning robot further includes a driving unit for providing a driving force for the cleaning robot to move and/or work, the driving unit includes a motor, and specifically, a motor in this embodiment. The driving unit includes a first motor for driving the moving module to move, and may further include a second motor for driving the wiping module to move. Certainly, the moving module and the wiping module may also share a motor, for example, a motor driving the moving module to move drives, through a transmission mechanism, the wiping module to move. In this embodiment, the cleaning robot further includes an energy module for providing energy for the cleaning robot to move and/or work. Specifically, the energy module includes a battery pack. In this embodiment, the control module includes hardware, or software, or a combination of hardware and software. For example, the control module may include a control circuit board and/or a program stored in the control circuit board.

In an embodiment, the wiping unit is detachably mounted at the wiping module. The wiping module includes a mounting frame, which matches the wiping unit to fix the wiping unit to the cleaning robot. The wiping unit may be connected to the mounting frame through magnetic adsorption, or by a mechanical structure such as a buckle. The wiping module may further include a driving unit, a moving mechanism, and the like. In an embodiment, the driving unit may alternatively be a part of the moving mechanism. The driving unit drives the moving mechanism to drive the wiping unit to move, so as to perform a cleaning work, or change a position, a posture, and the like of the wiping unit. A specific solution is described in detail below. The moving mechanism may include a lifting mechanism, a rotating mechanism, or the like in the following.

In an embodiment, the wiping unit removably mounts a wiping material, the wiping material is a material, for example, disposable cleaning paper or cleaning cloth, or cleaning cloth that may be washed and used repeatedly. The wiping material is mounted to the wiping unit by sticking or clamping. The wiping unit indirectly contacts a working surface through the wiping material. The wiping material is capable of effectively wiping dirt such as dust and stains on the working surface and attaching the dirt to collect the wiped dirt. In an embodiment, the wiping unit includes a wiping material, which is capable of directly cleaning the working surface. For example, the wiping unit includes a mop.

In this embodiment, in addition to the cleaning robot, the cleaning robot system further includes a base station for the cleaning robot to stop and providing maintenance. In an embodiment, the base station replenishes electric energy to the battery pack of the cleaning robot, and the cleaning robot is capable of automatically returning to the base station for replenishing the electric energy. The base station includes a power supply module and a charging interface. The cleaning robot returns to the base station to be docked with the base station, a charged interface of the cleaning robot is docked with the charging interface of the base station, to trigger the base station to charge, thereby entering a charging state. After charging is completed, the cleaning robot exits from the base station and restores a work execution state. In addition to the electric energy, the base station may further provide other replenishments for the robot. For example, water or cleaning fluid is replenished to a water tank of the robot. A replenishment process is similar to the charging process.

In an embodiment, the maintenance provided by the base station for the cleaning robot includes removing dirt. The cleaning robot is capable of automatically returning to the base station to remove dirt accumulated on the working surface wiped by the wiping unit, including removing the wiping unit itself. In an embodiment, the wiping unit is removably mounted to the cleaning robot, the cleaning robot is capable of automatically returning to the base station to replace the wiping unit, and the base station recycles an old wiping unit removed from the cleaning robot and/or provides a new wiping unit for the cleaning robot.

Certainly, the base station may alternatively provide other maintenance for the cleaning robot, for example, cleaning or for the cleaning robot to stop and stand by.

That is, in this embodiment, in addition to a work execution state, the cleaning robot further includes a maintenance state. The work execution state is a state in which the cleaning robot performs the cleaning work, and the maintenance state includes a state of charging, replacing the wiping unit, or the like. The cleaning robot is capable of switching from the work execution state to the maintenance state, and certainly, the cleaning robot is also capable of switching from the maintenance state to the work execution state.

The cleaning robot in this embodiment of the present invention is capable of automatically returning to a base station to complete maintenance, including charging, replacement of the wiping unit, and the like, so that frequent intervention of a user is avoided, and the intelligence of the robot is improved, thereby implementing full-automation and maintenance-free.

In a process in which the cleaning robot returns to a base station for maintenance, the wiping unit has been polluted in a process of performing a cleaning work, more dirt is accumulated, the polluted wiping unit continues to contact the working surface, which easily causes secondary pollution or cross-pollution on the working surface through which the wiping unit passes, especially when the working surface through which the wiping unit passes has been cleaned or when the robot frequently returns to the base station due to maintenance, or when the robot needs to pass through different types of working areas (for example, a kitchen, a bathroom, a bedroom, and a living room) when returning to the base station, the foregoing problems are especially obvious.

In this embodiment, while the cleaning robot is switching from the work execution state to the maintenance state, the control module controls the cleaning robot to move from a work execution position corresponding to the work execution state to a maintenance position. The work execution position is, for example, a position in which the work execution is interrupted, and the maintenance position is, for example, a position of the base station. The control module is configured to change a contact state between the wiping unit and the working surface, to enable at least a part of the wiping unit to be in a state of not contacting the working surface in at least a part of the process in which the cleaning robot moves from the work execution position to the maintenance position, where the at least a part is in a state of contacting the working surface in the work execution state.

That is, in at least a part of a process in which the cleaning robot returns to the base station for maintenance, a part of the wiping unit having performed cleaning work does not contact the working surface. In this way, the working surface through which the cleaning robot returns is not secondarily polluted or cross-polluted by the polluted wiping unit, and the impact of the cleaning robot returning to the base station, especially frequently returning to the base station, on cleanliness of the working surface is avoided, thereby improving a cleaning effect of the cleaning robot and optimizing user experience.

There are a plurality of implementations for changing the contact state between the wiping unit and the working surface. Several manners are listed below.

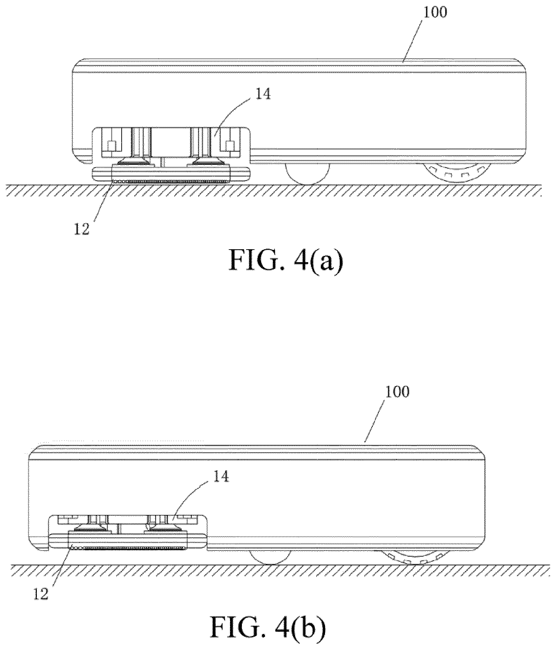

As shown in FIG. 4(a) and FIG. 4(b), in an embodiment, the cleaning robot includes a lifting mechanism, and the control module is configured to control the lifting mechanism to lift the wiping unit 12. As shown in FIG. 4(a), when the cleaning robot is in the work execution state, the wiping unit contacts the working surface, and the wiping unit is subject to a downward pressing force to closely contact the working surface. During movement of the cleaning robot, the wiping unit wipes the working surface, so as to perform the cleaning work. When the contact state between the wiping unit and the working surface needs to be changed, as shown in FIG. 4(b), the control module controls the lifting mechanism to lift the wiping unit, so that the wiping unit is in a state of not contacting the working surface after being lifted. That is, the wiping unit is lifted from a lower first height position relative to the working surface to a higher second height position relative to the working surface. Specifically, the lifting mechanism may lift the wiping unit by lifting the mounting frame connected to the wiping unit, and the lifting mechanism may be driven by the driving unit and/or the transmission mechanism to perform a lifting action. Certainly, the lifting mechanism may also restore the lifted wiping unit to a state of contacting the working surface. After the wiping unit is lifted, the wiping unit no longer contacts the working surface. Therefore, when the cleaning robot returns to the base station, dirt accumulated on the wiping unit does not pollute the working surface, and a cleaning effect of the cleaning robot on the working surface may be better.

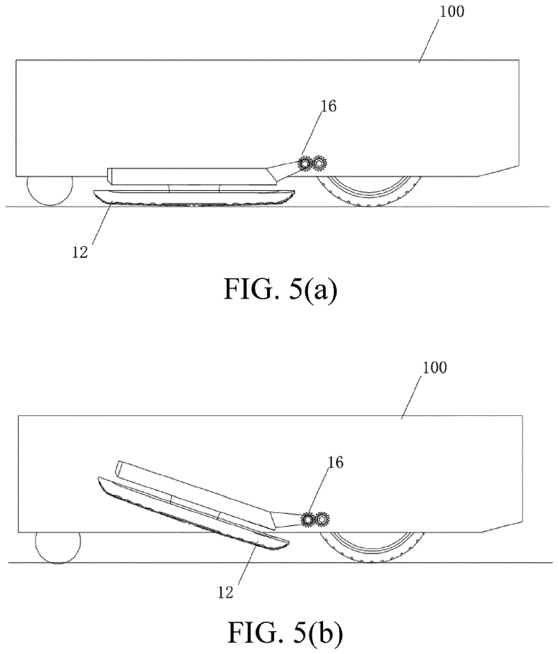

There may be a plurality of implementations of the lifting mechanism, which may be translated or rotated. Specifically, it may include an elevating mechanism, enabling the wiping unit to move up and down in a vertical direction, or a swing mechanism, or the like. Specifically, it may include a cam mechanism, a gear mechanism, a linkage mechanism, a telescoping mechanism, or the like. In the example shown in FIG. 4(a) and FIG. 4(b), the lifting mechanism is specifically the elevating mechanism 14, which drives the wiping unit to lift up or down in the vertical direction. However, in an example shown in FIG. 5(a) and FIG. 5(b), the lifting mechanism is specifically the swing mechanism 16. A moving gear is meshed with a fixed gear and rotates around the moving gear, and a swing rod rotates along with the moving gear, so that the wiping unit is driven to rotate in a vertical plane, and a posture of the wiping unit changes and the wiping unit is lifted from a first height position contacting the working surface to a second height position not contacting the working surface.

Referring to FIG. 4(a), FIG. 4(b), FIG. 5(a), and FIG. 5(b), the wiping unit includes a wiping plane, configured to wipe the working surface. When the wiping unit is lifted, the wiping plane is lifted, and the wiping plane does not contact the working surface, to prevent dirt accumulated on the wiping plane from polluting the working surface. The wiping unit may be specifically a wiping board, and a front edge and a rear edge of the wiping board slope or bend upward. Referring to FIG. 5(a) and FIG. 5(b), the bottom and the periphery of the wiping board may be covered with removable wiping materials.

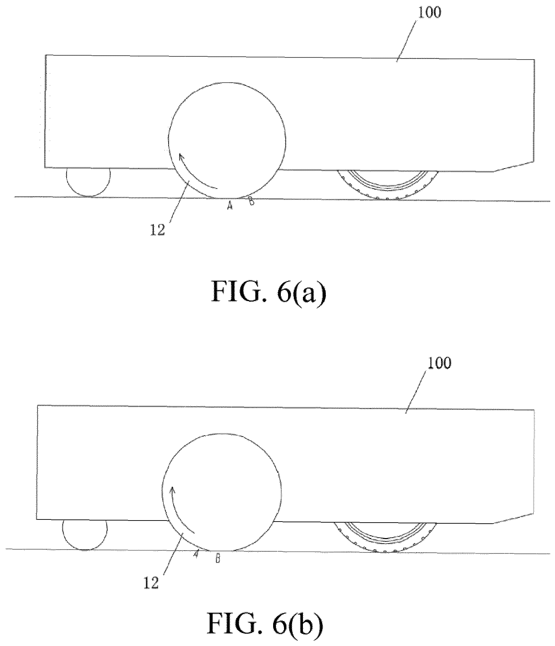

In an embodiment, as shown in FIG. 6(a) and FIG. 6(b), the cleaning robot includes a rotating mechanism, and the control module is configured to control the rotating mechanism to rotate the wiping unit, so as to change a part of the wiping unit contacting the working surface. The specific design of the rotating mechanism may be a mechanism design commonly used by a person skilled in the art, and details are not described herein again. Specifically, the wiping unit includes a rotating shaft, a wiping surface of the wiping unit for wiping the working surface forms a curved surface around the rotating shaft, and the rotating mechanism drives the wiping unit to rotate around the rotating shaft, to change a part of the curved surface contacting the working surface. In an embodiment, the wiping unit is a cylinder, a center line of the cylinder is the rotating shaft, and a side surface of the cylinder is the wiping surface. FIG. 6(a) and FIG. 6(b) show a cross section of the cylinder, a point on an edge of the cross section is a point on the wiping surface, and the cleaning work can be performed when the point contacts the working surface. When the cleaning robot is in the work execution state, the wiping unit is in a state shown in FIG. 6(a), and an area A on the wiping surface contacts the working surface, to perform the cleaning work. When the contact state between the wiping unit and the working surface needs to be changed, the control module controls the rotating mechanism to rotate the wiping unit, so that the wiping unit is in a state shown in FIG. 6 (b) after being rotated. In the state shown in FIG. 6(b), the area A on the wiping surface does not contact the working surface, an area B on the wiping surface contacts the working surface, and the area B has not performed the cleaning work. That is, the wiping unit is rotated, so that a part (the area A) of the wiping unit that contacts the working surface in the work execution state is away from the working surface, and a part (the area B) of the wiping unit that does not contact the working surface in the work state is close to the working surface. In the process in which the cleaning robot returns to the base station, as the area A that has performed the cleaning work no longer contacts the working surface, pollution is not caused to the working surface, and as the area B does not perform the cleaning work, the area B does not pollute the working surface when contacting the working surface, so that a cleaning effect of the cleaning robot is better. When the contact state between the wiping unit and the working surface is changed, an angle at which the rotating mechanism rotates the wiping unit only needs to ensure that the area A no longer contacts the working surface, that is, a part contacting the working surface in the work execution state no longer contacts the working surface. The rotating mechanism may rotate the wiping unit by 30 degrees, or 90 degrees, or 180 degrees or any other angle that meets the above condition. The wiping unit may change a part contacting the working surface in a process of performing the cleaning work. Therefore, it is also necessary to ensure that a part contacting the working surface during a returning process after the wiping unit is rotated is a part that has not performed the cleaning work. The control module may make the foregoing determination by recording a rotated angle in a working process, or detecting a pollution level of the wiping surface through a sensor.

In an embodiment, when the cleaning robot moves from the work execution position to the maintenance position, at least a part of the wiping unit is maintained in a state of not contacting the working surface. The embodiment shown in FIG. 4(a) and FIG. 4(b) is used as an example, while the cleaning robot is moving from the work execution position to the maintenance position, the wiping unit is always in a lifted state and does not contact the working surface, so that the cleaning robot does not pollute the working surface during the entire process of returning to the base station after interrupting work.

In an embodiment, when the cleaning robot is in the maintenance state, at least a part of the wiping unit is maintained in a state of not contacting the working surface, and the working surface herein includes a surface of a bottom board of the base station. The embodiment shown in FIG. 4(a) and FIG. 4(b) is still used as an example, when the cleaning robot is in a charging state, the wiping unit is maintained in the lifted state and does not contact the working surface. In this way, the wiping unit does not pollute the surface of the bottom board of the base station, and when the wiping unit is in a wet state, the base station is not corroded or damaged due to the continuous contact of the wet wiping unit with the base station in the charging process, and an accident or damage will not be caused due to moisture on the charging interface.

In an embodiment, the wiping unit is removably mounted at the cleaning robot, and when the cleaning robot is in the charging state, the cleaning robot is in a state of removing the wiping unit. That is, the cleaning robot first removes the wiping unit and then performs charging. In this way, the wiping unit can be prevented from polluting or damaging the base station in the charging process of the robot. Certainly, there are a plurality of choices for a sequence of the cleaning robot replacing the wiping unit and performing charging, and other sequences may also be used, for example, a new wiping unit is first mounted and then charging is performed.

In an embodiment, before the cleaning robot leaves the maintenance position after completing maintenance, the at least a part of the wiping unit is maintained in the state of not contacting the working surface. The embodiment shown in FIG. 4(a) and FIG. 4(b) is still used as an example, that is, before the cleaning robot drives away from the base station, the wiping unit on the base station is in the lifted state and does not contact the surface of the bottom board of the base station, and pollution and damage to the base station may also be better avoided. Details are not described herein again. Certainly, it may be understood that after the cleaning robot drives into the base station and before the cleaning robot is docked with the base station, the wiping unit is also in the lifted state.

In an embodiment, before the cleaning robot restores the work execution state, the at least a part of the wiping unit is maintained in the state of not contacting the working surface. In a process in which the cleaning robot returns to the base station for maintenance and before the cleaning robot re-enters the work execution state after completing the maintenance, the wiping unit may be enabled to maintain the state, and cross-pollution may be avoided.

In an embodiment, the cleaning robot automatically triggers an operation of returning to the base station for maintenance. For example, when the cleaning robot detects that a battery pack power is lower than a preset voltage, or a working time is higher than a preset time, it is determined that the cleaning robot needs to return to the base station for replenishing electric energy, and the control module controls the cleaning robot to switch a state and controls the cleaning robot to move from a current work execution position to the base station for replenishing the electric energy. Features during the movement are as described above. In another example, when the cleaning robot detects that a preset condition for removing dirt is met, the control module controls the cleaning robot to switch a state. The preset condition is, for example, that a worked area of the wiping unit exceeds a preset value, or a working time exceeds a preset value, or a pollution level of the wiping unit detected by the sensor exceeds a preset value. The cleaning robot returns to the base station to replace the wiping unit. Certainly, the switching a state of the cleaning robot may further be triggered by other situations such as the need to replenish liquid.

In an embodiment, the cleaning robot is manually triggered to return to the base station for maintenance. That is, the cleaning robot receives information from a user, and the control module controls, according to the information from the user, the cleaning robot to switch a state. For example, a user sends information indicating that the cleaning robot returns to the base station to be charged or remove dirt, the cleaning robot triggers state switching after receiving the information, and returns to the base station to be charged or replaces the wiping unit.

In an embodiment, the cleaning robot includes an operation unit, electrically connected to the control module, and the cleaning robot locally receives the information from the user through the operation unit. The user may directly operate on the cleaning robot, for example, press a corresponding key, to trigger the cleaning robot to switch a state. The control module triggers, according to a signal received by the operation unit, the cleaning robot to switch a state, and controls the cleaning robot to return to the base station for maintenance.

In an embodiment, the cleaning robot includes a first communication unit, electrically connected to the control module, and the first communication unit includes a wireless signal receiving unit and remotely receives the information from a user. For example, the first communication unit includes a communication device such as a Bluetooth, WiFi, or a cellular network, which can directly or indirectly communicate with an intelligent device such as a mobile phone or a PAD of the user and receive information sent by user equipment. When the user enters an instruction of performing a maintenance operation on a device such as a mobile phone, the cleaning robot receives, through the first communication unit, corresponding information sent by the user equipment, and the control module triggers, according to the information received by the first communication unit, the cleaning robot to switch a state.

In an embodiment, the base station includes a second communication unit, communicating with the first communication unit of the cleaning robot. The base station is capable of receiving the information from a user, the cleaning robot obtains the information from the user based on communication between the second communication unit and the first communication unit, and the control module of the cleaning robot triggers, based on the information obtained by the first communication unit, the cleaning robot to switch a state. The second communication unit of the base station and the first communication unit of the cleaning robot may be the same type or may be different types, and may implement communication directly or indirectly. A manner in which the base station receives the information from the user may be that the user directly operates keys on the base station, or may be another manner.

In an embodiment, the operation of the cleaning robot returning to the base station may also be automatically triggered by the base station. For example, when detecting that a working time of the cleaning robot reaches a preset value, the base station sends a signal to inform the cleaning robot to return to the base station for maintenance.

In an embodiment, the cleaning robot includes a surface detection sensor, electrically connected to the control module and configured to detect whether a cleaning work needs to be performed on a surface in a moving direction of the cleaning robot; and the control module is further configured to control the cleaning robot to exit from the work execution state when the surface detection sensor detects that the cleaning work does not need to be performed on the surface in the moving direction of the cleaning robot. In this embodiment, the surface detection sensor includes a carpet detection sensor, and when the carpet detection sensor detects that a carpet is under or in front of the robot, the control module controls the cleaning robot to exit from the work execution state. The carpet is easily polluted by a dirty wiping unit and causes relatively large resistance on the wiping unit, the cleaning robot is controlled to exit from the work execution state on a carpet, pollution to the carpet can be avoided, and a running fault of the robot is avoided. There are a plurality of types of the carpet detection sensors, for example, an ultrasonic wave, a laser, infrared, and a radar. A detection principle and manner are not described herein again. Certainly, the surface on which the cleaning work does not need to be performed may further include other types of surfaces.

In this embodiment, the exiting from the work execution state includes: enabling at least a part of the wiping unit to be in a state of not contacting the surface on which the cleaning work does not need to be performed, where the at least a part is in a state of contacting the working surface in the work execution state. The exiting from the work execution state further includes: enabling the cleaning robot to move on the surface on which the cleaning work does not need to be performed. Specifically, the cleaning robot is controlled to continuously move in the moving direction before exiting from the work execution state, so that the cleaning robot passes through the surface in a state of not performing the cleaning work. For a specific manner of changing the contact state between the wiping unit and the working surface, reference may be made to the above-mentioned lifting mechanism, and the lifting mechanism lifts the wiping unit to enable the wiping unit to not contact the working surface. Enabling the wiping unit to not contact the working surface helps the cleaning robot overcome the resistance of the surface such as the carpet. The carpet is usually paved on a floor or a floor tile, which is slightly higher than the floor or floor tile. Therefore, lifting the wiping unit further helps the cleaning robot overcome obstruction to the wiping unit of the raised carpet, and facilitates the cleaning robot to pass over the carpet. Certainly, for a specific manner of changing the contact state between the wiping unit and the working surface, reference may also be made to the above-mentioned rotating mechanism and the like.

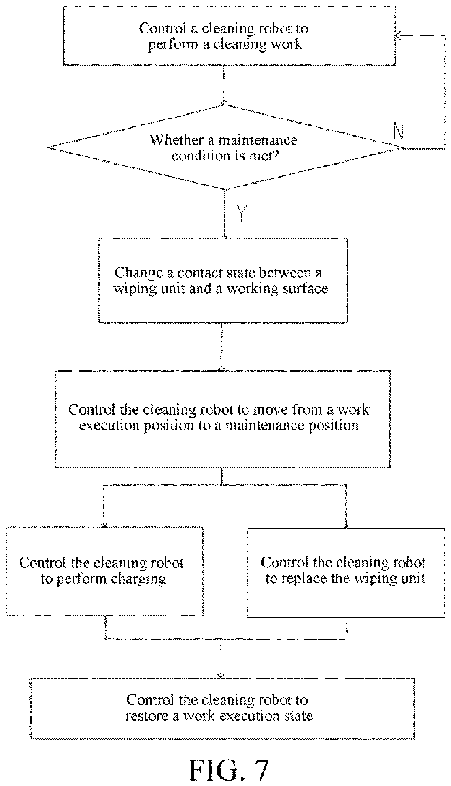

FIG. 7 is a flowchart of a cleaning robot switching from a work execution state to a maintenance state according to an embodiment. As shown in FIG. 7, in this embodiment, the state switching includes the following steps:
S 1. Control a cleaning robot to perform a cleaning work.
S2. Determine whether a maintenance condition is met, and if the maintenance condition is met, perform S3.
S3. Change a contact state between a wiping unit and a working surface, and enable at least a part of the wiping unit to be in a state of not contacting the working surface, where the at least a part is in a state of contacting the working surface in a work execution state.
S4. Control the cleaning robot to move from a work execution position to a maintenance position.

In this embodiment, when it is determined that the maintenance condition is met, the contact state between the wiping unit and the working surface is first controlled to change, and then the cleaning robot is controlled to start and return to the base station, so that during the entire process of the cleaning robot returning to the base station, at least a part of the wiping unit is maintained in a state of not contacting the working surface. Certainly, in another embodiment, alternatively, the cleaning robot may be first started and return to the base station, and then the contact state between the wiping unit and the working surface is controlled to change. S3 and S4 may also be parallel steps.

Specifically, the step of changing a contact state between a wiping unit and a working surface may be:
S31. Lift the wiping unit to enable the wiping unit to not contact the working surface, or
S32. Rotate the wiping unit, to change a part of the wiping unit contacting the working surface.

In this embodiment, the step of controlling the cleaning robot to move to a maintenance position includes:
S51. Control the cleaning robot to perform charging, or
S52. Control the cleaning robot to replace the wiping unit. Reference may be made to descriptions of the foregoing embodiments.

In this embodiment, the step of determining whether a maintenance condition is met includes: determining, by the cleaning robot according to detection of a parameter of the cleaning robot, whether the maintenance condition is met, or determining, by the cleaning robot according to receiving of external information, whether the maintenance condition is met. The external information includes information from a user. The maintenance condition includes a parameter of at least one of the following reaching a preset value: a battery power, a working time, or a working area of the cleaning robot, or a pollution level of the wiping module. Reference may be specifically made to the descriptions of the foregoing embodiments.

Other steps of this embodiment refer to the descriptions of the foregoing embodiments, and includes a step of detecting a surface such as a carpet on which a cleaning work does not need to be performed, and the like.

In this embodiment, after the cleaning robot completes maintenance, the following steps are further included:
S6. Control the cleaning robot to restore the work execution state.

In another embodiment of the present invention, a cleaning robot system is provided, including a cleaning robot and a base station, and a basic structure is similar to the foregoing embodiment. A control module is configured to control the cleaning robot to remove a wiping unit and/or mount a wiping unit, that is, the cleaning robot may autonomously unload and/or mount the wiping unit; and the base station is configured to recycle the removed wiping unit and provide a wiping unit for mounting, that is, the base station has both functions of recycling a dirty wiping unit and providing a new wiping unit. The foregoing cleaning robot system makes the operation of replacing the wiping unit simpler while implementing both the functions of recycling and providing the wiping unit. The structure and control of the cleaning robot system may also be combined with descriptions of the following embodiments.

In another embodiment of the present invention, the cleaning robot may be a sweeping and mopping integrated machine. As shown in FIG. 1 to FIG. 3, in an embodiment, the cleaning robot 100 includes a body 10, a walking mechanism, a cleaning mechanism, a dust-collecting mechanism, a power mechanism, and a control mechanism, and further includes a navigation mechanism. A walking element of the walking mechanism includes a driving gear 21 and a driven gear 22 for driving 100 to move. It may be understood that the walking element may also include a track structure. The cleaning mechanism includes a rolling brush 31 and side brush 32 structure, the rolling brush 31 and side brush 32 mechanism uses a common rolling brush 31 and side brush 32 in the industry, which are configured to clean sundries such as dust on the ground, corner, and the like. The dust-collecting mechanism includes components such as a dust-collecting box and a fan. Dust cleaned by the rolling brush 31, the side brush 32, or the like is collected into the dust-collecting box through suction generated by using the fan. The power mechanism includes a motor and a transmission mechanism connected to the motor, the transmission mechanism is connected to the walking mechanism, the motor drives the transmission mechanism to work, and a transmission effect of the transmission mechanism enables the walking mechanism to move. The transmission mechanism may be a worm gear and worm mechanism, a bevel gear mechanism, or the like. The power mechanism may be provided with two sets of motors, one set of motor drives the walking mechanism to move, and the other set of motor drives the cleaning mechanism to work. Alternatively, the power mechanism may be provided with one set of motor, and the walking mechanism and the cleaning mechanism share the set of motor. It may be understood that a quantity of each set of motors is not limited, for example, there may be one or two motors. Certainly, the motor may be replaced with a motor to provide power. The navigation mechanism includes sensors such as a cliff sensor, a side sensor, and a tilt sensor commonly used in the field of cleaning robots, which provide environment control data and control the cleaning robot 100 to work.

The control mechanism is, for example, a controller, and may be an embedded digital signal processor (DSP), a microprocessor unit (MPU), an application-specific integrated circuit (ASIC), a programmable logic device (PLD), a system on chip (SOC), a central processing unit (CPU), a field programmable gate array (FPGA), or the like.

The control mechanism may control, according to a preset program or a received instruction, the cleaning robot 100 to work. Specifically, the control mechanism may control the walking mechanism to walk according to a preset walking path in a working area of the cleaning robot 100. While the walking mechanism drives the cleaning robot 100 to walk, the control mechanism controls the cleaning mechanism to work, so as to remove garbage such as dust in the working area. When the walking mechanism drives the cleaning robot 100 to complete walking in the preset path and enables the cleaning mechanism to complete work, the control mechanism may close the work of the cleaning mechanism and controls the walking mechanism to walk, so that the walking mechanism drives the cleaning robot 100 to leave the working area. A walking path and a stop position of the cleaning robot 100 may be preset in the control mechanism, and the control mechanism controls the walking mechanism to execute.

As shown in FIG. 1 and FIG. 2, the cleaning robot 100 further includes a wiping module, and the wiping module includes a mounting board 41 and a moving mechanism. The moving mechanism is, for example, an elevating mechanism, and a wiping unit is mounted on the mounting board 41, for example, the mounting board 41 is provided with a magnetic element such as a magnetic stripe or a magnetic block, which may absorb the wiping unit through a magnetic force. The elevating mechanism includes an elevating motor and an elevating transmission mechanism, and the elevating motor drives the elevating transmission mechanism to drive the mounting board 41 to rise or fall. The elevating transmission mechanism is, for example, an elevating transmission mechanism formed through cooperation of a gear and a rack. The cleaning robot 100 further includes a sensor disposed on the body 10, for example, a ground sensor and a tilt sensor, and when the ground sensor detects that a ground state changes, the mounting board is controlled to rise or fall. It may be understood that the ground state includes a hard ground state or a carpet state, when the ground sensor detects that the ground state is the carpet state, the mounting board 41 is controlled to rise, and when the ground sensor detects that the ground state is the hard ground state, the mounting board 41 is controlled to fall. The tilt sensor detects whether the body 10 is lifted, so that the control mechanism controls the elevating mechanism to drive the mounting board 41 to rise or fall. When it is detected that a front portion is lifted, the mounting board 41 is controlled to rise, and when it is detected that a tail portion is lifted, the mounting board 41 is controlled to fall. It may be understood that, in this embodiment, one side on which the rolling brush 31 is mounted is the front portion of the body 10, and an opposite side is the tail portion of the body 20. The wiping module may be specifically a mopping mechanism, the wiping unit may be specifically a mopping rag, and the mounting board 41 may be specifically a mopping board.

In a specific embodiment, the ground sensor or the tilt sensor is mounted on the body 10, a specific position is not limited, for example, mounted on a front wall or a bottom base of the machine, and there is at least one sensor.

### Embodiment A

When detecting that a ground has changed from a hard floor to a carpet state, the ground sensor sends a signal to the control mechanism, the control mechanism controls the elevating motor to start forward rotation, and the elevating transmission mechanism formed through cooperation of the gear and the rack drives the mounting board 41 to rise. In this way, the wiping unit connected to the mounting board 41 may also be lifted, thereby avoiding an obstacle formed by the carpet. On the contrary, when detecting that the ground has changed from the carpet state to the hard floor state, the ground sensor sends a signal to the control mechanism, the control mechanism controls the elevating motor to perform reverse rotation, and the elevating transmission mechanism formed through cooperation of the gear and the rack drives the mounting board 41 to fall. In this way, the wiping unit connected to the mounting board 41 also falls, thereby restoring a state of contacting the hard floor. It should be noted that the ground sensor includes a current sensor, and the ground state is determined according to a current change detected by the current sensor. For example, the current sensor detects the current change when the rolling brush 31 encounters a carpet to determine the ground state. In another embodiment, the ground sensor includes a vision sensor, and the ground state is determined according to a ground image change detected by the vision sensor. In addition, the elevating transmission mechanism of the mounting board 41 may alternatively adopt another structure manner, which can achieve the same functional effect.

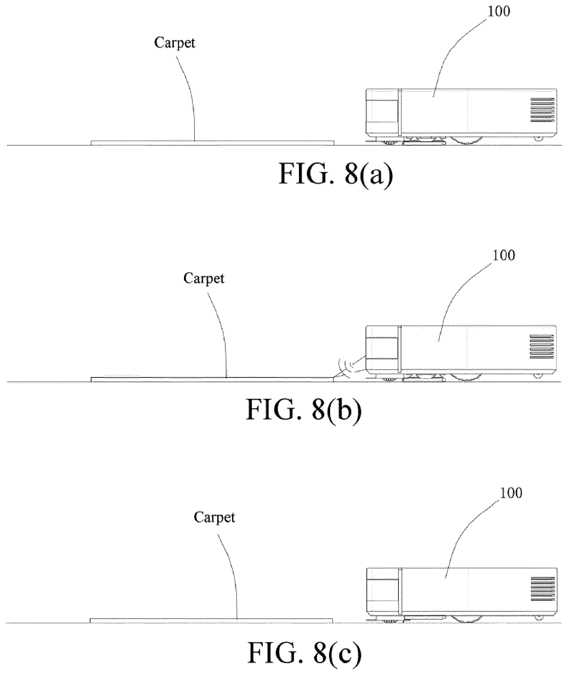

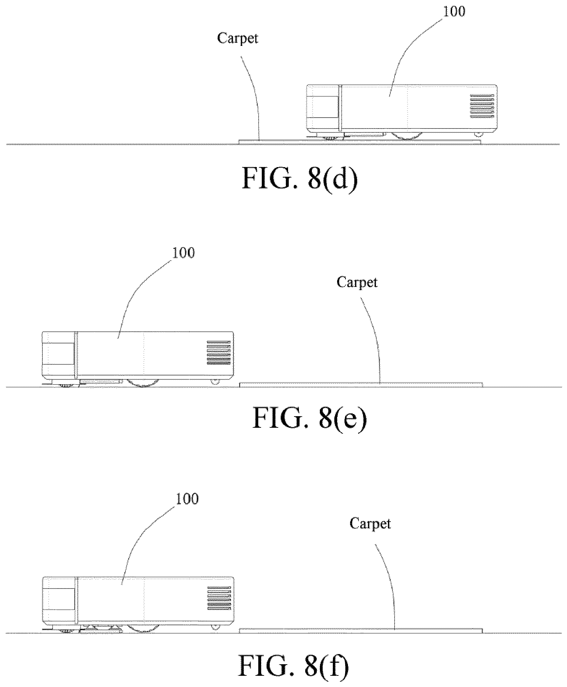

FIG. 8 is a process in which a cleaning robot 100 controls a mounting board 41 to lift up or down according to an embodiment. FIG. 8(a) is an initial state, and the cleaning robot 100 works on a hard ground floor. In this case, an elevating mechanism is not started, and the mounting board 41 closely contacts the hard ground floor. In a walking process of the robot, the ground sensor detects a ground state. As shown in FIG. 8(b), the ground sensor detects that a front ground is an uneven carpet, that is, the cleaning robot 100 is about to contact the carpet. In this case, as shown in FIG. 8(c), the ground sensor sends a signal to the control mechanism, and the control mechanism controls the elevating motor to perform forward rotation to drive the elevating transmission mechanism to start, so as to control the mounting board 41 to drive the wiping unit to rise. As shown in FIG. 8(d), when the cleaning robot 100 is in a state of working on a carpet, the elevating mechanism still maintains the mounting board 41 in a rising position, and only the rolling brush 31 mechanism works. As shown in FIG. 8(e), when the cleaning robot 100 finishes the work on the carpet and just enters a state of working on a hard ground, the mounting board 41 is still in the rising position. As shown in FIG. 8(f), the ground sensor detects that the ground has completely changed from the carpet state to the hard ground state, and the control mechanism controls the elevating motor to perform reverse rotation to drive the elevating transmission mechanism to work, to enable the mounting board 41 to fall, so that the wiping unit is restored to contact the hard ground floor. After the foregoing steps, the cleaning robot 100 may pass over the carpet obstacle and re-enter the hard ground to work and clean the hard ground by using the wiping unit disposed on the mounting board 41.

### Embodiment B

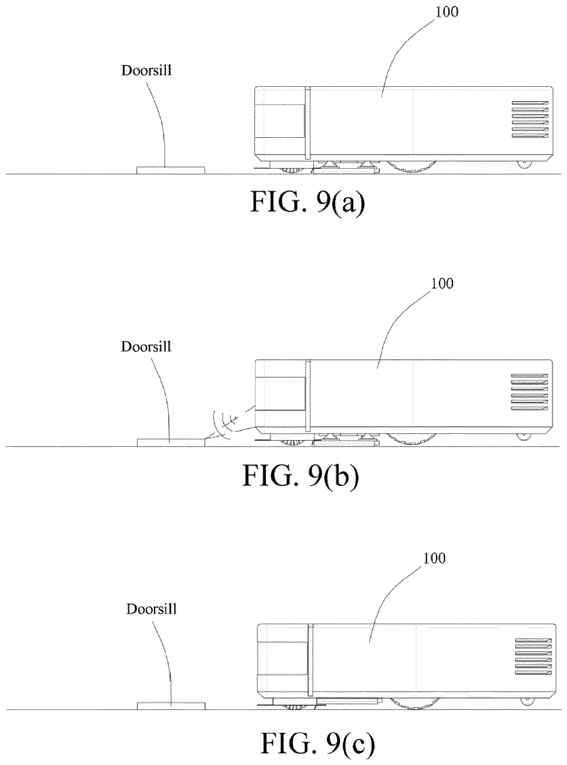

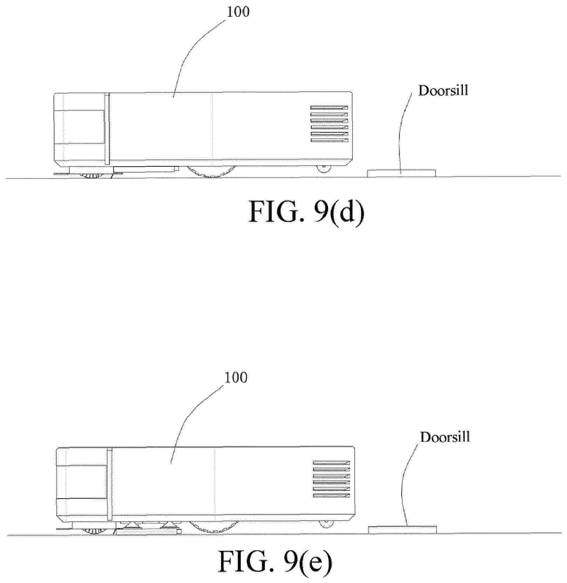

FIG. 9 is a process in which a cleaning robot 100 controls a mounting board 41 to lift up or down when encountering a doorsill according to an embodiment. The cleaning robot 100 works on a hard ground floor. In this case, an elevating mechanism is not started, and the mounting board 41 closely contacts the hard ground floor. In a walking process of the cleaning robot 100, the ground sensor detects a ground state. When the ground sensor detects that a front ground is a protruded obstacle, for example, a doorsill, the cleaning robot 100 needs to pass over the doorsill, and the cleaning robot 100 is ready to lift the wiping unit. In this case, a signal is sent to the control mechanism, and the control mechanism controls the elevating motor to perform forward rotation and drives the elevating transmission mechanism to start, so as to control the mounting board 41 to drive the wiping unit to rise. When the cleaning robot 100 drives away from the doorsill, a signal is sent to the control mechanism, and the control mechanism controls the elevating motor to perform reverse rotation and drives the elevating transmission mechanism to start, so as to control the mounting board 41 to drive the wiping unit to fall, so that the wiping unit is restored to a state of contacting the hard ground floor. After the foregoing steps, the cleaning robot 100 may pass over the doorsill obstacle and re-enter the hard ground shown in FIG. 9(e) to work and clean the hard ground by using the wiping unit disposed on the mounting board 41. The foregoing lifting process may prevent dirt on the wiping unit from remaining on an obstacle such as the doorsill.

### Embodiment C

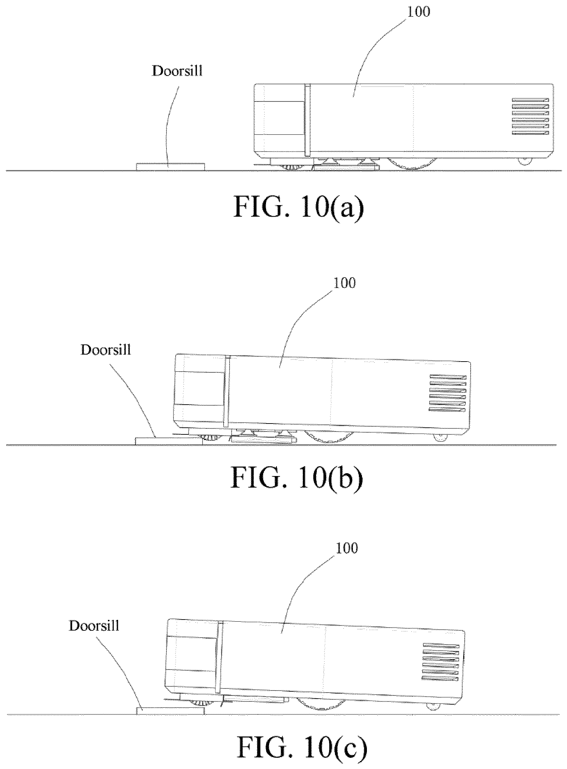

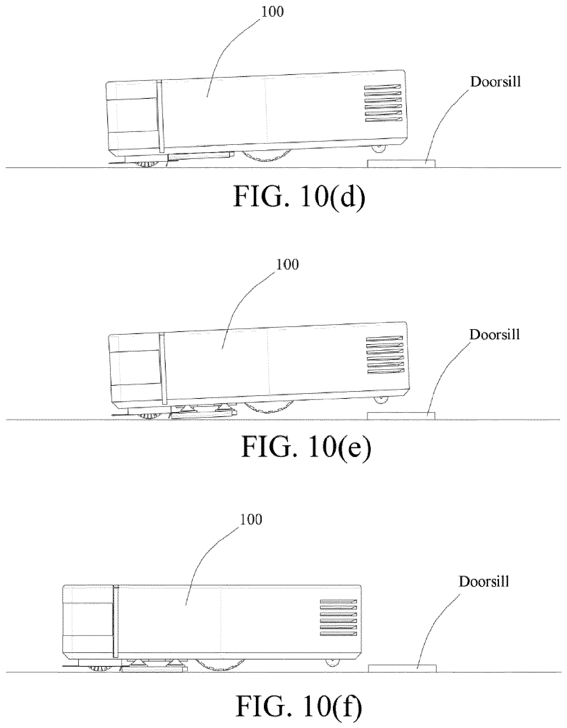

FIG. 10 is a process in which a cleaning robot 100 controls a mounting board 41 to lift up or down when encountering a doorsill according to an embodiment. The cleaning robot 100 works on a hard ground floor. In this case, an elevating mechanism is not started, and the mounting board 41 closely contacts the hard ground floor. In a walking process of the cleaning robot 100, the ground sensor detects a ground state. When the ground sensor detects that a front ground is a protruded obstacle, for example, a doorsill, the driving gear 21 of the cleaning robot 100 needs to pass over the doorsill, and a front portion of the cleaning robot 100 is first lifted, and the tilt sensor senses the lifting of the front portion of the robot 100. In this case, a signal is sent to the control mechanism, and the control mechanism controls the elevating motor to perform forward rotation and drives the elevating transmission mechanism to start, so as to control the mounting board 41 to drive a rag to rise. When the cleaning robot 100 drives away from the doorsill, a tail portion of the machine is lifted, and the tilt sensor senses the lifting of the tail portion of the robot. In this case, a signal is sent to the control mechanism, and the control mechanism controls the elevating motor to perform reverse rotation and drives the elevating transmission mechanism to start, so as to control the mounting board 41 to drive the wiping unit to fall, so that the wiping unit is restored to a state of contacting the hard ground floor. After the foregoing steps, the cleaning robot 100 may pass over the doorsill obstacle and re-enter the hard ground to work and clean the hard ground by using the wiping unit disposed on the mounting board 41. The foregoing lifting process may prevent dirt on the wiping unit from remaining on an obstacle such as the doorsill.

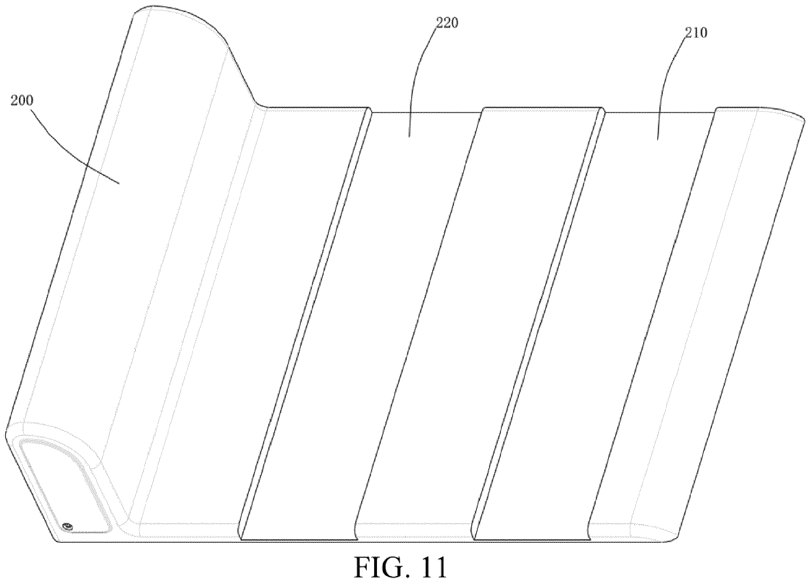

With reference to FIG. 11, the cleaning robot 100 further includes a wiping unit replacement mechanism, and the wiping unit replacement mechanism includes a mounting board 41, and further includes a moving mechanism and an unloading apparatus. The cleaning robot 100 further includes a ground sensor. The mounting board 41 is provided with a wiping unit, for example, the mounting board 41 is provided with a magnet such as a magnetic stripe or a magnetic block, which may absorb the wiping unit through a magnetic force. The moving mechanism is, for example, an elevating mechanism, the elevating mechanism includes an elevating motor and an elevating transmission mechanism, and the elevating motor drives the elevating transmission mechanism to drive the mounting board 41 to rise or fall. The elevating transmission mechanism is, for example, an elevating transmission mechanism formed through cooperation of a gear and a rack. The ground sensor detects a ground state change to determine whether the ground state is a wiping unit recycling apparatus 210 and a spare wiping unit storage apparatus 220, when it is determined that the ground state is the wiping unit recycling apparatus 210, the control mechanism controls the unloading apparatus to unload the wiping unit to the wiping unit recycling apparatus 210, and when it is determined that the ground state is the spare wiping unit storage apparatus 220, the control mechanism controls the elevating mechanism to drive the mounting board 41 to fall, so as to mount a new wiping unit from a wiping unit storage position. It may be understood that a type of a sensor that detects the wiping unit recycling apparatus 210 and the spare wiping unit storage apparatus 220 is not limited, provided that features of the wiping unit recycling apparatus 210 and the spare wiping unit storage apparatus 220 can be identified for accurate alignment.

In a specific embodiment, the ground state includes the hard ground, the wiping unit recycling apparatus 210, and the spare wiping unit storage apparatus 220, surface states of the three positions are different, and the foregoing positions can be distinguished through detection of the ground sensor. It may be understood that the features of the wiping unit recycling apparatus 210 and the spare wiping unit storage apparatus 220 may be different, and certainly the features of the two may be alternatively the same, provided that the features of the two are distinguished by using other methods. A type of the ground sensor is not limited, including a current sensor. The ground state is determined according to a current change detected by the current sensor. For example, the current sensor detects that a current change when the rolling brush 31 encounters the wiping unit recycling apparatus 210 and the spare wiping unit storage apparatus 220 is different from a current change when the rolling brush 31 works on the hard ground, and it is determined whether the ground state is the wiping unit recycling apparatus 210 and the spare wiping unit storage apparatus 220 based on this. In another embodiment, the ground sensor includes a vision sensor, and the ground state is determined according to a ground image change detected by the vision sensor. The mounting position of the ground sensor is not limited, for example, the ground sensor is mounted on a front wall or a bottom base of the body 10. A quantity of the ground sensors is also not limited, and there is at least one ground sensor. In addition, the elevating transmission mechanism of the mounting board 41 may further adopt another structure manner, which can achieve the same functional effect.

The cleaning robot 100 is provided with a base station 200 for the cleaning robot 100 to return to perform charging. The wiping unit recycling apparatus 210 and the spare wiping unit storage apparatus 220 are disposed on the base station 200. It may be understood that the two apparatuses are disposed on two positions of the base station 200. A first position of the base station 200 is provided with the wiping unit recycling apparatus 210, configured to recycle an unloaded dirty wiping unit, and a second position of the base station 200 is provided with the spare wiping unit storage apparatus 220, configured to store a spare wiping unit. When the ground sensor determines that the ground state is the wiping unit recycling apparatus 210 or the spare wiping unit storage apparatus 220 of the base station 200, replacement of the wiping unit is performed. After the wiping unit is replaced, when the ground sensor determines that the ground state is the hard ground, the wiping unit is controlled to clean the ground again.

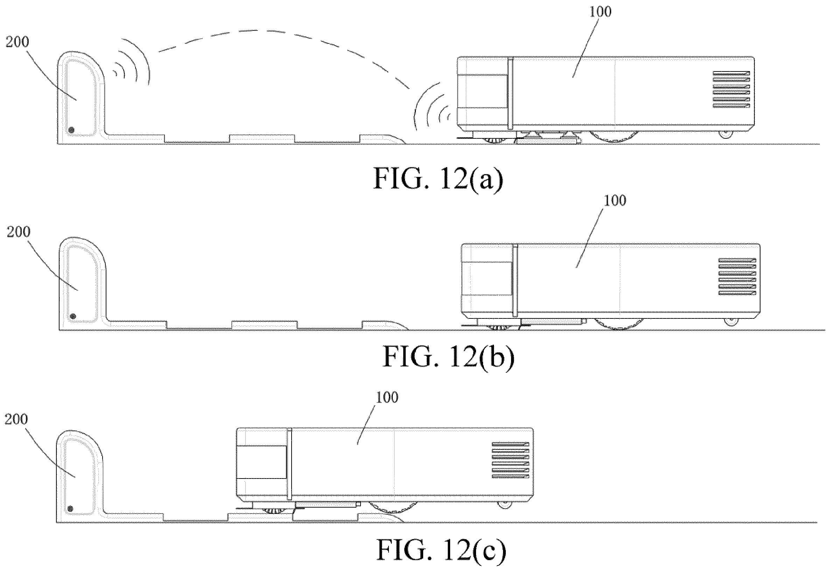

As shown in FIG. 12(a), in a specific embodiment, when the cleaning robot 100 performs a cleaning work on a hard ground by using the wiping unit, the cleaning robot 100 sends a signal to identify the base station 200 after receiving a wiping unit replacement instruction. The wiping unit replacement instruction may be an instruction from a user, for example, the user operates an instruction of replacing the wiping unit on a terminal. The cleaning robot 100 receives the instruction. Alternatively, the user may enter an instruction on a body of the cleaning robot 100, for example, press a replacement button, or may press an instruction on the base station 200 and transmit to the cleaning robot 100 for receiving the instruction. Certainly, it may be understood that the replacement instruction may alternatively be set inside the cleaning robot 100, for example, a program sets a preset condition for the cleaning robot 100 to replace the wiping unit. When the preset condition for replacement is met, the wiping unit replacement mechanism of the cleaning robot 100 receives the wiping unit replacement instruction, and for example, the preset condition for replacement is set to that the wiping unit of the cleaning robot 100 needs to be replaced after a use time N.

As shown in FIG. 12(b), after identifying the base station 200, the cleaning robot 100 walks to near the base station 200 and performs a wiping unit replacement preparation work, for example, the elevating mechanism is controlled to drive the mounting board 41 to rise, so as to drive the wiping unit to rise.

In another specific embodiment, after receiving the wiping unit replacement instruction, the cleaning robot 100 timely sends a signal to the control mechanism, then the control mechanism controls the elevating motor to start forward rotation, and the elevating transmission mechanism formed through cooperation of the gear and the rack drives the mounting board 41 to rise. In this way, the wiping unit connected to the mounting board 41 may also be lifted up and ready for replacement, to prevent the dirty wiping unit from polluting the ground.

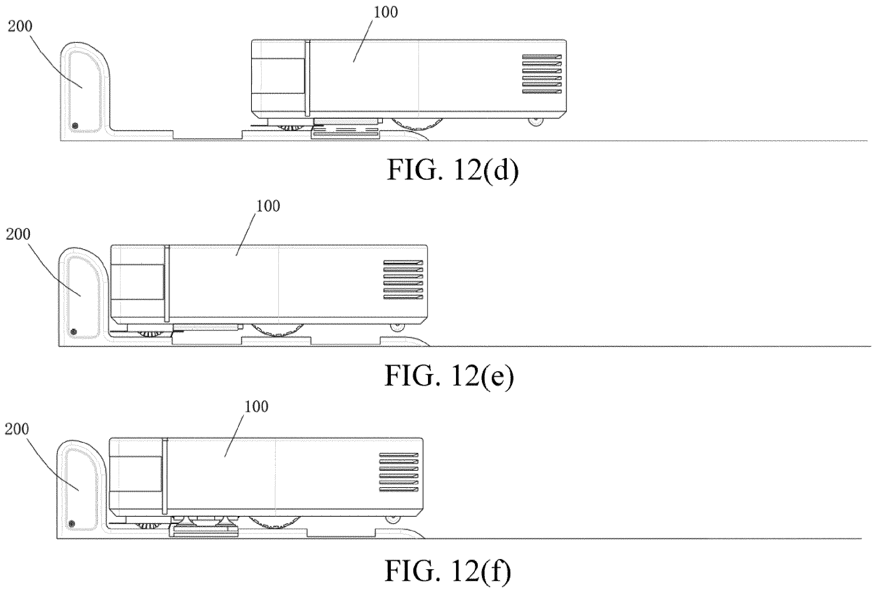

After identifying the base station 200 and performing the wiping unit replacement preparation work, the cleaning robot continues to walk and detects a surface of the base station 200 by using the ground sensor. As shown in FIG. 12(c), the first position of the base station 200, that is, the wiping unit recycling apparatus 210 is detected by using the ground sensor. In this case, as shown in FIG. 12(d), the cleaning robot 100 timely sends a signal to control the unloading apparatus to start, and the wiping unit attached with stains is lifted off the mounting board 41 and falls into the wiping unit recycling apparatus 210 on the base station 200. The unloading apparatus herein specifically refers to a slide bar that moves downward in a vertical direction, and after the slide bar slides, the wiping unit is separated from the magnet on the mounting board 41 by overcoming the action of the magnetic force, and the wiping unit falls down. Certainly, other structural manner may be alternatively adopted, which can achieve the same functional effect.

As shown in FIG. 12(e), after the wiping unit is unloaded, the cleaning robot 100 continues to walk and continues to detect the ground by using the ground sensor until walks to the second position of the base station 200, that is, the spare wiping unit storage apparatus 220. In this case, as shown in FIG. 12(f), the cleaning robot 100 timely sends a signal to the control mechanism, the control mechanism controls the elevating motor to perform reverse rotation, and the elevating mechanism formed through cooperation of the gear and the rack drives the mounting board 41 to fall. In this way, the mounting board 41 may be close to a spare wiping unit, and the wiping unit is adsorbed to the mounting board 41 by the action of the magnetic force of the magnet.

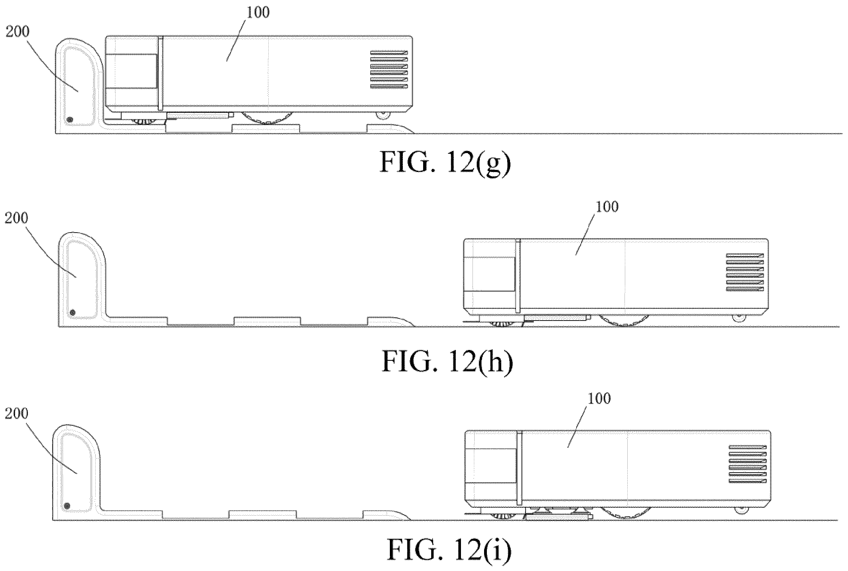

As shown in FIG. 12(g), after the cleaning robot 100 is provided with a new wiping unit, the mounting board 41 rises again to drive the wiping unit to rise. The lifting position herein is different from a lifting position of the hard ground, and a lifting amplitude of the lifting position is less than a normal working state, that is, there is a gap between the mounting board 41 and the base station 200. In this way, after the wiping unit is adsorbed, there is also a gap between the wiping unit and the base station 200, and no frictional interference occurs. Alternatively, the elevating mechanism is started again to rise, to rise the wiping unit to a non-working state position.

As shown in FIG. 12(h), after completing the automatic replacement of the wiping unit, the cleaning robot 100 retreats to leave the base station 200 and enter a hard ground for work. In this case, as shown in FIG. 12(i), the ground sensor detects that a ground is a hard ground, the elevating mechanism is controlled to work to lower the mounting board 41, so that the wiping unit is restored to contact the hard ground. After the foregoing steps, the cleaning robot 100 completes the automatic replacement operation of the wiping unit and may perform the cleaning work of the hard ground again.

In other embodiments, when the cleaning robot passes over an obstacle, for example, the obstacle is a carpet, a front portion of the robot is first lifted, the tilt sensor sends a signal, and the wiping unit lifts. When the cleaning robot drives away from the obstacle, a tail portion of the cleaning robot is lifted, the tilt sensor sends a signal, and the wiping unit falls down. In this way, dirt on the wiping unit is prevented from remaining on the obstacle.

In other embodiments, in a sweeping and mopping integrated robot, the pressure of the wiping unit against the ground is provided by a spring and a suitable pressure results in a better cleaning effect.

In other embodiments, a distance between at least one side of the wiping unit and a center of the robot is greater than the rolling brush, in this way, the machine may sweep a corner and an edge portion more cleanly.

In other embodiments, when the robot enters a state of returning to perform charging or replacing the wiping unit, the wiping unit needs to be lifted, so that the dirty wiping unit may be prevented from passing through an area which is cleaned and causing secondary pollution. After the robot is fully charged or the wiping unit is replaced, and when the robot returns to the position of the breaking point, the wiping unit is put down and continues to work.

In other embodiments, the wiping unit has two or more states such as a working state, a lifting state, and a replacement state.

In other embodiments, a vibration isolation or damping apparatus needs to be mounted between the lifting mechanism of the wiping unit and the housing of the robot, so that the impact of the wiping unit vibration on other functions of the machine such as visual navigation is avoided.

In other embodiments, the robot may implement identification of wiping units with different functions, and then automatically enters different modes, for example, a dry wiping mode and a wet mopping mode. In this way, the cleaning work may be performed better.

In other embodiments, the robot may implement identification of different wiping units, and then enters a corresponding area for work, for example, a kitchen, a bathroom, and a bedroom. In this way, a corresponding wiping unit may work in a corresponding area.

In other embodiments, a power ratio relationship between a driving motor of the rolling brush and a vibration motor of the wiping unit is between 1 and 10, and the cleaning effect is better.

In other embodiments, a ratio relationship between a length of the rolling brush and a length of the wiping unit is between 0.5 and 1.0, and the cleaning effect is better.

In other embodiments, the appearance of the sweeping and mopping integrated machine is designed to be D-shaped, so that a corner cleaning effect may be better, and an escape capability of the machine is not affected.

In other embodiments, the rolling brush and the wiping unit are located at the same side of the robot, so that the wiping unit may be as long as possible, and a corner cleaning effect is better.

In other embodiments, a ratio of a contact area of the wiping unit and the ground to an area of a robot chassis is greater than 0.2, so that the cleaning effect may be better and the cleaning efficiency is higher.

In other embodiments, the connection between the wiping unit and the mounting board depends on the magnet, so that the wiping unit may be conveniently replaced.

In other embodiments, a volume ratio of a dust tank to a water tank is between 2 and 4, so that a sufficient endurance capacity may be guaranteed, and a weight and a size of the robot are in a proper range.

In other embodiments, the wiping unit is in a vibrating state during working, the water tank is stationary relative to the robot, and water from the water tank is injected into the wiping unit through a deformable pipe.

In other embodiments, the robot is divided into a sweeping mode and a mopping mode, in the sweeping mode, the wiping unit is lifted, and in the mopping mode, a rotational speed of the rolling brush is lower than a normal operating rotational speed, or the sound emitted by the rolling brush is within a user acceptable range, that is, less than 30 db.

In other embodiments, a walking speed of the robot in the mopping state is less than or equal to a walking speed of the machine in the sweeping state, so that a mopping effect may be better.

In other embodiments, the sweeping and the mopping may not work at the same time, and switching between the two functions is completed by the robot automatically, so that manual intervention is not required, which is more intelligent.

In other embodiments, an edge of at least one side of the wiping unit exceeds a contour of the robot, and both sides of the rolling brush may not exceed the contour of the machine, so that the corner cleaning effect is better.

According to the cleaning robot, the cleaning robot system, and the cleaning method thereof provided in the embodiments of the present invention, when a wiping unit needs to be replaced, through cooperation of a set wiping unit replacement apparatus, wiping unit recycling apparatus, spare wiping unit storage apparatus, or the like, automatic replacement of the wiping unit is implemented, automatic experience of a user is improved, and a replacement method is simple and quick. According to the wiping unit recycling apparatus and the spare wiping unit storage apparatus on the base station provided in the present invention, multifunctional reuse of the base station is implemented, and an occupied area is saved.

According to the cleaning robot and the cleaning method thereof provided in the embodiments of the present invention, when a ground is changed, for example, when an obstacle such as a carpet or a doorsill is met, a set automatic elevating mechanism drives a wiping unit to lift up or down, a problem that a mopping robot works on an uneven surface such as a carpet or on a protruded obstacle such as a doorsill and is blocked is avoided, and an advantageous operational control is provided for passing over obstacles such as a carpet and a doorsill.

The foregoing embodiments only show several implementations of the present invention and are described in detail, but they should not be construed as a limit to the patent scope of the present invention. Suitable combination between the embodiments of the present invention may be possible. It should be noted that, a person of ordinary skill in the art may make various changes and improvements without departing from the ideas of the present invention, which shall fall within the protection scope of the present invention. Therefore, the protection scope of the patent of the present invention shall be topic to the appended claims.

## Claims

1. A cleaning robot, comprising:
a housing;
a moving module, mounted at the housing and configured to drive the cleaning robot to move; and
a control module, configured to control the moving module to drive the cleaning robot to move;
the cleaning robot is configured to mount a wiping unit, and when the cleaning robot moves on a working surface, the wiping unit is capable of directly or indirectly contacting the working surface to wipe the working surface, to perform a cleaning work; wherein
the cleaning robot comprises a work execution state, the cleaning robot performs the cleaning work in the work execution state, the cleaning robot further comprises a maintenance state, and the cleaning robot is capable of switching from the work execution state to the maintenance state;
while the cleaning robot is switching from the work execution state to the maintenance state, the control module controls the cleaning robot to move from a work execution position corresponding to the work execution state to a maintenance position corresponding to the maintenance state; and
the control module is configured to change a contact state between the wiping unit and the working surface, to enable at least a part of the wiping unit to be in a state of not contacting the working surface in at least a part of the process in which the cleaning robot moves from the work execution position to the maintenance position, where the at least a part is in a state of contacting the working surface in the work execution state.

2. The cleaning robot according to claim 1, wherein the maintenance state comprises a replenishing state, and the maintenance position comprises a position of a base station for providing replenishment.

3. The cleaning robot according to claim 2, wherein the cleaning robot is powered by a battery to move and/or work, the replenishing state comprises a charging state for charging the battery, and the base station comprises a charge station.

4. The cleaning robot according to claim 3, wherein when the cleaning robot detects that a battery power is lower than or a working time is greater than a preset value, or when the cleaning robot receives information about replenishment of electrical energy, the control module controls the cleaning robot to switch a state.

5. The cleaning robot according to claim 1, wherein the cleaning robot is capable of automatically removing dirt accumulated on the working surface wiped by the wiping unit, and the maintenance state comprises a dirt removal state.

6. The cleaning robot according to claim 5, wherein the wiping unit is removably mounted at the cleaning robot, the dirt removal state comprises an operation and/or operations of removing the wiping unit and/or mounting the wiping unit, and the maintenance position comprises a position of a base station in which the wiping unit is removed and/or mounted.

7. The cleaning robot according to claim 5, wherein when the cleaning robot detects that a preset condition for removing the dirt is met, or receives information about removing the dirt, the control module controls the cleaning robot to switch a state.

8. The cleaning robot according to claim 1, wherein the wiping unit is capable of removably mounting a wiping material, and when wiping the working surface, the wiping unit indirectly contacts the working surface through the wiping material.

9. The cleaning robot according to claim 1, wherein the maintenance state comprises a standby state, and the maintenance position comprises a position of a base station for the cleaning robot to stop.

10. The cleaning robot according to claim 1, wherein the cleaning robot comprises a lifting mechanism, the control module is further configured to control the lifting mechanism to lift the wiping unit, and the changing a contact state between the wiping unit and the working surface comprises: controlling, by the control module, the lifting mechanism to lift the wiping unit, so that the wiping unit does not contact the working surface.

11. The cleaning robot according to claim 10, wherein the wiping unit comprises a wiping plane, configured to wipe the working surface, and when the lifting mechanism lifts the wiping unit, the lifting mechanism lifts the wiping plane from a first height position contacting the working surface to a second height position not contacting the working surface.

12. The cleaning robot according to claim 10, wherein the lifting mechanism comprises an elevating mechanism or a swing mechanism.

13. The cleaning robot according to claim 1, wherein the cleaning robot comprises a rotating mechanism, the control module is further configured to control the rotating mechanism to rotate the wiping unit, and the changing a contact state between the wiping unit and the working surface comprises: controlling, by the control module, the rotating mechanism to rotate the wiping unit, to change a part of the wiping unit contacting the working surface.

14. The cleaning robot according to claim 13, wherein the control module controls the rotating mechanism to drive the wiping unit to rotate, so that a part of the wiping unit that contacts the working surface in the work execution state is away from the working surface, and a part of the wiping unit that does not contact the working surface in the work execution state is close to the working surface.

15. The cleaning robot according to claim 13, wherein the wiping unit comprises a rotating shaft, a wiping surface of the wiping unit for wiping the working surface forms a curved surface around the rotating shaft, and the rotating mechanism drives the wiping unit to rotate around the rotating shaft, to change a part of the curved surface contacting the working surface.

16. The cleaning robot according to claim 1, wherein while the cleaning robot is moving from the work execution position to the maintenance position, the at least a part of the wiping unit is maintained in the state of not contacting the working surface.

17. The cleaning robot according to claim 1, wherein when the cleaning robot is in the maintenance state, and/or before the cleaning robot leaves the maintenance position after completing maintenance, the at least a part of the wiping unit is maintained in the state of not contacting the working surface.

18. The cleaning robot according to claim 1, wherein the cleaning robot is powered by a battery to move and/or work, the maintenance state comprises a charging state for charging the battery, the wiping unit is removably mounted at the cleaning robot, and when the cleaning robot is in the charging state, the cleaning robot is in a state of removing the wiping unit.

19. The cleaning robot according to claim 1, wherein before the cleaning robot restores the work execution state, the at least a part of the wiping unit is maintained in the state of not contacting the working surface.

20. The cleaning robot according to claim 1, wherein the cleaning robot receives information from a user, and the control module controls, according to the information from the user, the cleaning robot to switch a state.

21. The cleaning robot according to claim 20, wherein the cleaning robot comprises a wireless signal receiving unit and remotely receives the information from the user through the wireless signal receiving unit; or the cleaning robot comprises an operation unit and locally receives the information from the user through the operation unit.

22. The cleaning robot according to claim 1, wherein the cleaning robot comprises a surface detection sensor, electrically connected to the control module and configured to detect whether a cleaning work needs to be performed on a surface in a moving direction of the cleaning robot;
the control module is further configured to control the cleaning robot to exit from the work execution state when the surface detection sensor detects that the cleaning work does not need to be performed on the surface in the moving direction of the cleaning robot; and
the exiting from the work execution state comprises: enabling at least a part of the wiping unit to be in a state of not contacting the surface on which the cleaning work does not need to be performed, where the at least a part is in a state of contacting the working surface in the work execution state.

23. The cleaning robot according to claim 22, wherein the exiting from the work execution state further comprises: enabling the cleaning robot to move on the surface on which the cleaning work does not need to be performed.

24. The cleaning robot according to claim 22, wherein the surface detection sensor comprises a carpet detection sensor, configured to detect whether there is a carpet in the moving direction of the cleaning robot, and if it is detected that there is the carpet, the control module controls the cleaning robot to exit from the work execution state.

25. A cleaning robot system, comprising a cleaning robot according to any of the foregoing, and a base station, wherein the base station provides maintenance for the cleaning robot.

26. A control method for a cleaning robot, wherein the cleaning robot comprises a housing, a moving module, and a control module, the control module is configured to control the moving module to drive the cleaning robot to move, the cleaning robot is configured to mount a wiping unit, when the cleaning robot moves on a working surface, the wiping unit is capable of wiping the working surface to perform a cleaning work, and the control method comprises the following steps:
controlling the cleaning robot to perform the cleaning work;
determining whether a maintenance condition is met;
controlling the cleaning robot to move from a work execution position to a maintenance position if the maintenance condition is met; and
changing a contact state between the wiping module and the working surface, to enable at least a part of the wiping module to be in a state of not contacting the working surface in at least a part of the process in which the cleaning robot moves from the work execution position to the maintenance position, where the at least a part is in a state of contacting the working surface in a work execution state.

27. The control method according to claim 26, wherein the determining whether a maintenance condition is met comprises: determining, by the cleaning robot according to detection of a parameter of the cleaning robot, whether the maintenance condition is met, or determining, by the cleaning robot according to receiving of external information, whether the maintenance condition is met.

28. The control method according to 27, wherein the external information comprises information from a user.

29. The control method according to 26, wherein the maintenance condition comprises a parameter of at least one of the following reaching a preset value: a battery power, a working time, or a working area of the cleaning robot, or a pollution level of the wiping unit.

30. The control method according to claim 26, wherein the changing a contact state between the wiping unit and the working surface comprises: lifting the wiping unit to enable the wiping unit to not contact the working surface; or rotating the wiping unit to change a part of the wiping unit contacting the working surface.

31. A cleaning robot system, wherein the cleaning robot system comprises a cleaning robot, and the cleaning robot comprises:
a housing;
a moving module, mounted at the housing and configured to drive the cleaning robot to move; and
a control module, configured to control the moving module to drive the cleaning robot to move;
the cleaning robot is configured to mount a wiping unit, and when the cleaning robot moves on a working surface, the wiping unit is capable of wiping the working surface to perform a cleaning work;
the cleaning robot comprises a work execution state, the cleaning robot performs the cleaning work in the work execution state, the cleaning robot further comprises a maintenance state, and the cleaning robot is capable of switching from the work execution state to the maintenance state; and
the control module is further configured to trigger the cleaning robot to switch from the work execution state to the maintenance state, the cleaning robot is capable of receiving information from a user, and the control module triggers the state switching according to the information from the user.

32. The cleaning robot system according to claim 31, wherein the cleaning robot comprises a first communication unit, the first communication unit comprises a wireless signal receiving unit, and the cleaning robot remotely receives the information from the user through the wireless signal receiving unit, or the cleaning robot comprises an operation unit, and the cleaning robot locally receives the information from the user through the operation unit.

33. The cleaning robot system according to claim 31, wherein the cleaning robot system further comprises a base station, configured to provide maintenance for the cleaning robot;
the cleaning robot comprises a first communication unit, electrically connected to the control module;
the base station comprises a second communication unit, communicating with the first communication unit of the cleaning robot; and
the base station is capable of receiving the information from a user, the cleaning robot obtains the information from the user based on communication between the second communication unit and the first communication unit, and the control module of the cleaning robot triggers the state switching based on the information obtained by the first communication unit.
